# EUROPÄISCHE PATENTSCHRIFT

(11) **EP 1 234 738 B1**
(45) Veröffentlichungstag und Bekanntmachung des Hinweises auf die Patenterteilung: **23.08.2006**
(21) Anmeldenummer: 02002661.3
(22) Anmeldetag: 06.02.2002
(51) Int. Cl.: B60S 1/34

(54) **Wischvorrichtung, insbesondere für ein Kraftfahrzeug**
Wiper device, in particular for a vehicle
Dispositif d'essuie-glace, en particulier pour un véhicule

(30) Priorität: 21.02.2001 DE 10108184
(43) Veröffentlichungstag der Anmeldung: 28.08.2002
(73) Patentinhaber: ROBERT BOSCH GMBH, 70442 Stuttgart (DE)
(72) Erfinder: Zimmer, Joachim, 77880 Sasbach (DE); Rapp, Harald, 77815 Buehl (DE)

(56) Entgegenhaltungen:
- EP-A- 0 579 550
- GB-A- 2 311 461
- US-A- 2 715 238
- US-A- 2 860 365
- PATENT ABSTRACTS OF JAPAN vol. 2000, no. 20, 10. Juli 2001 (2001-07-10) -& JP 2001 080466 A (NIFCO INC), 27. März 2001 (2001-03-27)

## Beschreibung

### Stand der Technik

Die Erfindung betrifft eine Wischvorrichtung, insbesondere für ein Kraftfahrzeug, nach Gattung des unabhängigen Anspruchs. Es sind schon zahlreiche Wischvorrichtungen, beispielsweise aus der EP 0 579 550 bekannt, bei denen die Auflagekraft, mit der das Wischblatt auf die Scheibe des Kraftfahrzeugs gedrückt wird, durch eine am Wischerarm befestigte Feder bewirkt wird.

Der Wischerarm weist dazu ein im wesentlich längliches Gelenkteil auf, an das an einem Ende das Wischblatt anlenkbar ist. Am anderen Ende ist das Gelenkteil mit einem ebenfalls im wesentlichen länglichen Befestigungsteil gelenkig verbunden, welches drehfest an der Wischerwelle der Wischvorrichtung befestigt wird.

Das Gelenkteil und das Befestigungsteil sind beide im Querschnitt von im wesentlichen U-förmiger Gestalt und beispielsweise mittels eines Bolzens drehbar verbunden.

Zur Erzeugung der Auflagekraft ist auf der der Scheibe zugewandten Seite der gelenkigen Verbindung zwischen Gelenkteil und Befestigungsteil eine Zugfeder gespannt. Das Befestigungsteil weist dazu einen Bolzen auf, in den eine Seite eines C-förmigen Bügels eingehakt ist. An der anderen Seite des Bügels ist ein Ende der Zugfeder eingehakt, deren anderes Ende mittels eines weiteren Bolzens am Gelenkteil befestigt ist.

Weiterhin ist aus der GB-A-2 311 461 eine Scheibenwischvonichtung nach dem Oberbegriff des Anspruchs 1 bekannt.

### Vorteile der Erfindung

Die erfindungsgemäße Scheibenwischvorrichtung mit den Merkmalen des Hauptanspruchs hat den Vorteil, dass durch die Anlenkung eines Zugmittels an einer Lasche des Befestigungsteils ein Bolzen am Befestigungsteil eingespart werden kann. Dadurch wird die Anzahl der benötigten Arbeitsschritte reduziert, da das Befestigungsteil normalerweise in Stanz-Biege-Technik hergestellt wird. In diesem Schritt kann dann auch die Lasche ausgestanzt und gebogen werden, wodurch das einziehen eines Niets oder eines Bolzens entfällt. Dies spart Ressourcen, Material- und Fertigungskosten. Außerdem kann der Wischerarm dadurch flacher gebaut werden.

Erfindungsgemäß Weist die Lasche einen Stützansatz auf, so wird die Belastung der Lasche, insbesondere in abgeklappter Stellung, wenn also das Wischblatt die Scheibe nicht berührt, reduziert und eine mögliche Verbiegung der Lasche verhindert.

Besonders vorteilhaft ist dabei, daß der Stützansatz zur Abstützung der Lasche an der Basis, von einer Kante der Lasche etwa senkrecht zur Basis hin verläuft. Dies gilt auch, wenn der Stützansatz einstückig mit der Lasche ausgebildet ist, da so das komplette Befestigungsteil mit Lasche und Stützansatz einstückig in Stanz-Biege-Technik ausgebildet werden kann.

Durch die in den Unteransprüchen aufgeführten Maßnahmen ergeben sich vorteilhafte Weiterbildungen und Verbesserungen der im Hauptanspruch angegebenen Merkmale.

Besonders vorteilhaft ist es, wenn die Lasche, von der der Basis abgewandten Kante der Lateralflanke des Befestigungsteils ausgehend, etwa parallel zur Basis bzw. senkrecht zur Lateralflanke verläuft, um eine torsionsbelastungsfreie Aufhängung des Zugmittels zu gewährleisten.

Weiters ist vorteilhaft, die Lasche einstückig mit dem Befestigungsteil auszubilden, da die Lasche so stabil mit dem Befestigungsteil verbunden ist und keine weiteren, aufendigen und eventuell fehlerverursachenden Befestigungstechniken, wie Schweißen oder Kleben etc. angewandt werden müssen.

Besonders vorteilhaft ist es weiterhin, wenn die Lasche mindestens an der gelenkseitigen Hälfte des Befestigungsteils, vorzugsweise im gelenkseitigen Viertel der Längserstreckung des Befestigungsteils angeordnet ist. Auf diese Weise kann der Befestigungsbereich des Zugmittels sich über den Gelenkbereich zwischen Gelenkteil und Befestigungsteil erstrecken, so dass der Zugbereich des Zugmittels nicht abgeknickt werden muss.

Weist die Lasche eine Öffnung zur Befestigung des Zugmittels auf, so kann das Zugmittel schnell und zuverlässig in der Serienfertigung in das Befestigungsteil eingehängt werden.

Besteht das Zugmittel aus mindestens einer Zugfeder und einem C-förmigen Bügel, so kann kostengünstig erhältliche Massenware als Zugmittel eingesetzt werden.

Ist die Öffnung, in welche das Zugmittel, insbesondere der Bügel des Zugmittels, eingehängt ist, an zumindest einer das Zugmittel berührenden Stelle verstärkt, so wird der Verschleiß dieser Verbindung vorteilhafterweise minimiert.

Ist zwischen dem laschenfernen Ende des Stützansatzes und der Basis ein Spalt vorhanden, so können vorteilhafterweise fertigungstechnische Toleranzen ausgeglichen werden. Durch das Einwirken der Federkraft des Zugmittels in der Abklappstellung wird die Lasche in Richtung der Basis gebogen. Dadurch kommt es zu einer elastischen Verformung und damit zum Kontakt zwischen Stützansatz und Basis, wodurch eine weitere plastische Verformung der Lasche wirksam verhindert wird.

Es ist auch von Vorteil, wenn die Lasche einen Ansatz aufweist, der das Innere des Profils des Befestigungsteils im wesentlichen abschließt, so dass die Lasche als Halterung für einen Waschflüssigkeitsschlauch der Scheibenwischvorrichtung dient.

Besonders vorteilhaft ist es, wenn das Zugmittel am Gelenkteil ebenfalls mit einer Befestigungslasche befestigt ist, die in etwa derselben Ebene, wie die Lasche des Befestigungsteils angeordnet ist, wenn sich Gelenkteil und Befestigungsteil in einer Arbeitsstellung befinden. Anders formuliert, es ist von besonderem Vorteil, wenn der zwischen Lateralflanke des Befestigungsteils und der Lasche eingeschlossene Winkel etwa gleich groß ist wie der Winkel, den die Befestigungslasche des Gelenkteils mit der Gelenkteilflanke einschließt. Auf diese Weise ist eine torsionsbelastungsfreie Aufhängung des Zugmittels möglich, wenn dessen Befestigungen ebenfalls in etwa einer Ebene liegen. Dies ist beispielsweise bei handelsüblichen Zugfedern mit Bügel der Fall.

### Zeichnungen

Ein Ausführungsbeispiel der Erfindung ist in den Zeichnungen dargestellt und in der nachfolgenden Beschreibung näher erläutert. Es zeigen:
Figur 1, eine schematische Darstellung einer Scheibenwischvorrichtung,
Figur 2 einen Wischerarm nach dem Stand der Technik in perspektivischer Darstellung,
Figur 3 eine perspektivische Darstellung der Federeinhängung einer erfindungsgemäßen Scheibenwischvorrichtung in Abklappstellung,
Figur 4 eine perspektivische Darstellung einer Federeinhängung einer erfindungsgemäßen Scheibenwischvorrichtung in Arbeitsstellung.

### Beschreibung des Ausführungsbeispiels

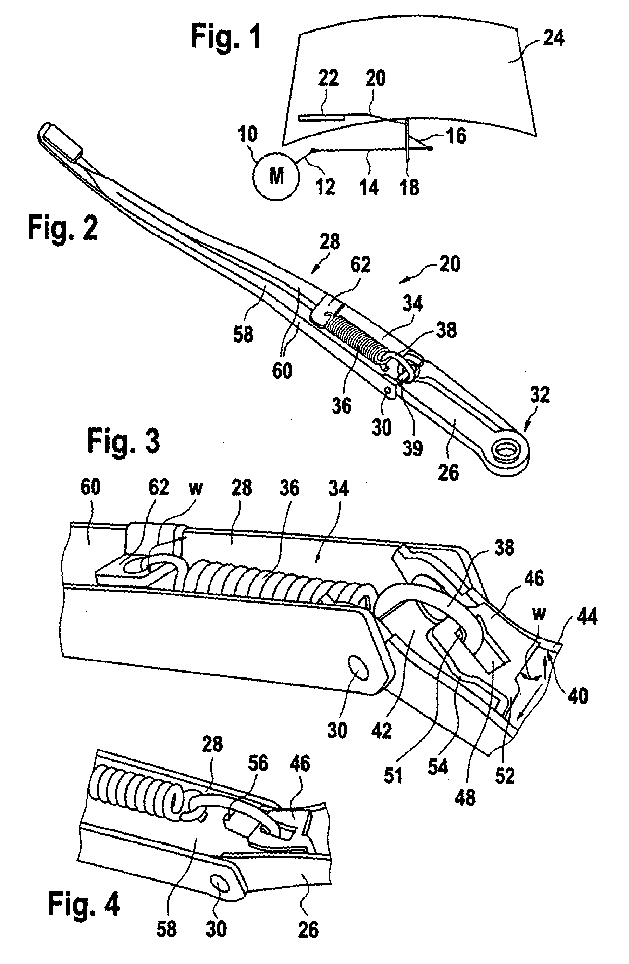

In Figur 1 ist eine erfindungsgemäße Scheibenwischvorrichtung schematisch dargestellt. Ein Motor 10 bewegt eine Kurbel 12, die über eine Schubstange 14 und einen Hebel 16 eine Wischerwelle 18 pendelnd antreibt. Ein Wischerarm 20 ist an einem Ende mit der Wischerwelle 18 drehfest verbunden und trägt an seinem anderen Ende ein Wischblatt 22. Dieses kann dadurch über eine Scheibe 24 gleiten.

In Figur 2 ist ein Wischerarm 20 mit seinen wesentlichen Komponenten in perspektivischer Darstellung gezeigt. Dieser umfaßt im wesentlichen ein Befestigungsteil 26, welches mit einem Gelenkteil 28 drehbeweglich verbunden ist. Das Gelenkteil 28 ist von im wesentlichen länglicher, U-förmiger Gestalt mit einer Gelenkteilbasis 58, einer vorderen und einer hinteren Gelenkteilflanke 60 und weist an einem Ende eine Befestigungsvorrichtung auf, mit der es am Wischblatt 22 anlenkbar ist. An seinem anderen Ende ist es über einen Gelenkbolzen 30 mit dem Befestigungsteil 26 verbunden, welches ebenfalls eine im wesentlichen längliche Gestalt aufweist. An dem dem Gelenkteil 28 abgewandten Ende weist das Befestigungsteil 26 ein Auge 32 auf, durch das es drehfest mit der Wischerwelle 18 verbindbar ist. Außer über den Gelenkbolzen 30 sind Befestigungsteil 26 und Gelenkteil 28 auch über ein Zugmittel 34 miteinander verbunden. Dieses Zugmittel 34 besteht aus einer Zugfeder 36 und einem C-förmigen Bügel 38, der in einen Zugmittelbolzen 39 eingehakt ist. Da das Befestigungsteil 26 mit der Wischerwelle 18 starr verbunden ist, wird das Gelenkteil 28 durch das Zugmittel 34 in Richtung der Scheibe 24 gezogen, wodurch das Wischblatt 22 mit einer Auflagekraft F auf die Scheibe 24 gedrückt wird. Der Zugmittelbolzen 39 ist dazu natürlich etwa parallel zum Gelenkbolzen 30, jedoch etwas näher an der Scheibe 24 angeordnet. In der Figur ist der Gelenkbolzen 30 durch den Zugmittelbolzen 31 etwas verdeckt.

In Figur 3 ist der Verbindungsbereich zwischen Gelenkteil 28 und Befestigungsteil 26 mit dem Zugmittel 34 detailliert dargestellt.

Das Befestigungsteil 26 ist im Querschnitt von im wesentlichen U-förmiger Gestalt. Die beiden Schenkel bilden zwei Lateralflanken 40, welche durch eine Basis 42 verbunden sind. An der der Basis 42 abgewandten Lateralkante 44 der Lateralflanke 40 ist eine Lasche 46 angeordnet, die einstükkig mit der Lateralflanke 40 ausgebildet ist und etwa rechtwinklig zur Lateralflanke 40 abgebogen ist, so daß sie etwa parallel zur Basis 42 verläuft. Die Lasche 46 kann natürlich auch auf eine andere Weise, wie Schweißen oder Kleben, befestigt sein. Die Lasche 46 weist darüber hinaus eine Öffnung 48 auf, in die der C-förmige Bügel 38 eingehakt ist. Die Lasche 46 ersetzt somit den Zugmittelbolzen 39 aus Figur 2.

Da die Lasche 46 eine Materialstärke von etwa 1,5 mm aufweist, ergibt sich, dass der normalerweise im Querschnitt runde Bügel 38 an zwei Auflagepunkten an der Ober- und Unterseite der Lasche 46 aufliegt. Um diese Belastungspunkte, welche die Verschleißfestigkeit der Verbindung reduzieren, zu vermeiden, ist in diesem Bereich ein Auflageelement 51 angeordnet, welches so ausgebildet ist, dass der Auflagebereich des Bügels 38 an der Öffnung 48 zumindest einer Linie, wenn nicht gar einer Fläche entspricht. Dazu kann beispielsweise beim Stanzen der Öffnung 48 ein kleiner Wulst als Auflageelement 51 gebogen oder verprägt werden.

Das Gelenkteil 28 ist in Figur 3 in einer abgeklappten Stellung dargestellt, wie dies beispielsweise beim Wechseln des Wischblatts 22 der Fall ist. Die Kraftwirkung des Zugmittels 34 besitzt in dieser Stellung eine große Komponente in der Richtung, die die Lasche 46 zur Basis 42 hin zu verbiegen sucht. Um dies zu vermeiden, weist die Lasche 46 einen Stützansatz 52 auf. Dieser ist in einem Randbereich der Lasche 46 angeordnet, der von der Lateralflanke 40, an der die Lasche 46 befestigt ist, sinnvollerweise entfernt ist. Zum Ausgleich der Fertigungstoleranzen ist es möglich, den Stützansatz 52 nicht auf der Basis 42 aufliegen zu lassen, sondern so auszubilden, dass sich zwischen dem laschenabgewandten Ende des Stützansatzes 52 und der Basis 42 ein kleiner Spalt bildet. Der Spalt soll dabei nur so groß sein, dass im Belastungsfall nur eine elastische Verformung der Lasche 46 in Richtung der Basis möglich ist. Vor einem Übergang in eine plastische Verformung wird die Lasche dann durch den Stützansatz 52 an der Basis 42 abgestützt.

Weiterhin weist die Lasche 46 einen Ansatz 54 auf, der gerade so groß ist, dass zwischen dem Ansatz 54 und der Lateralflanke 40, an der die Lasche 46 nicht befestigt ist, nur ein Abstand bleibt, der so groß ist, dass ein elastischer Schlauch zum Transport von Waschflüssigkeit einer Scheibenwaschanlage durchgepreßt werden kann, oder - anders ausgedrückt -, dass der Spalt zwischen dem Ansatz 54 und der dem Ansatz 54 gegenüberliegenden Lateralflanke 40 kleiner ist als der Normaldurchmesser eines Waschwasserschlauchs einer Scheibenwaschanlage. Natürlich kann auch der Stützansatz 52 so ausgebildet sein, dass er zur Führung eines Waschwasserschlauchs dienen kann.

Zur Befestigung der Zugfeder 36 am Gelenkteil 28, weist dieses eine Befestigungslasche 62 auf, die sich von der der Gelenkteilbasis 58 abgewandten Kante der Gelenkteilflanke 60 aus, nach innen zur Gelenkteilbasis 58 hin erstreckt und mit der Gelenkteilflanke 60 einen Winkel w einschließt. Da die Befestigungslasche 62 auch mehrere Abschnitte aufweisen kann, ist die Zugfeder 36 natürlich in dem Abschnitt der Befestigungslasche 62 befestigt, der mit der Gelenkteilflanke 60 den etwa gleichen Winkel w einschließt, wie der Abschnitt der Lasche 46, an dem der Bügel 38 eingehakt ist mit der Lateralflanke 40 des Befestigungsteils 26.

In Figur 4 ist die Verbindung zwischen Gelenkteil 28 und Befestigungsteil 26 wie in Figur 3 dargestellt, jedoch in der Arbeitsstellung, in der das Wischblatt 22 in Berührung mit der Scheibe 24 steht. Die Lasche 46 ist im Bereich des Gelenkbolzens 30, und damit im gelenkteilseitigen Viertel des Befestigungsteils 26 angeordnet. Um den Drehwinkel des Gelenkteils 28 gegenüber dem Befestigungsteil 26 zusätzlich zu begrenzen, weist das Befestigungsteil 26 in seinem Überlappungsbereich mit dem Gelenkteil 28 Nasen 56 auf, welche mit der Gelenkteilbasis 58 korrespondieren. Die Nasen 56 sind dabei so dimensioniert, dass sie bei minimalem Winkel zwischen Befestigungsteil 26 und Gelenkteil 28 auf der Gelenkteilbasis 58 zur Auflage kommen.

Natürlich ist es auch möglich, die Lasche 46 im Bereich der Wischerwelle 18 anzuordnen. In diesem Falle verläuft die Zugfeder 36 im inneren Bereich des Befestigungsteils 26. Dieser Fall entspricht daher einer Umkehr der in Figur 2 gezeigten Ausführungsform. Die Lasche 46 ist dann im Wischerwellenseitigen Viertel des Befestigungsteils 26 angeordnet, wobei in die Lasche 46 in diesem Falle die Zugfeder 36 anstatt der Bügel 38 eingehakt ist. Der C-förmige Bügel 38 ist immer im Bereich der Verbindung zwischen Gelenkteil 20 und Befestigungsteil 26 angeordnet, um Beschädigungen des Zugmittels 34 beim Abklappen zu verhindern.

Prinzipiell ist es natürlich möglich die Lasche 46 oder die Befestigungslasche 62 und/oder weitere Laschen ähnlicher Art nur zur Befestigung des Waschwasserschlauchs vorzusehen.

## Patentansprüche

1. Scheibenwischvorrichtung, insbesondere für ein Kraftfahrzeug, mit einem Wischerarm (20), der zumindest ein Gelenkteil (28) und ein Befestigungsteil (26) aufweist, das an das Gelenkteil (28) angelenkt ist und mittels eines Zugmittels (34) mit dem Gelenkteil (28) verbunden ist, wobei das Befestigungsteil (26) im wesentlichen aus einem Profil mit einer Basis (42) und mindestens einer Lateralflanke (40) besteht, wobei das Zugmittel (34) am Befestigungsteil (26) an einer sich von der Lateralflanke (40) aus erstreckenden und mit dieser verbundenen Lasche (46) befestigt ist, **dadurch gekennzeichnet, dass** die Lasche (46) einen Stützansatz (52) aufweist und der Stützansatz (52) zur Abstützung der Lasche (46) an der Basis (42) von einer Kante der Lasche (46) etwa senkrecht zur Basis (42) hin verläuft.

2. Scheibenwischvorrichtung nach Anspruch 1, **dadurch gekennzeichnet, dass** die Lasche (46) von der der Basis (42) abgewandten Kante der Lateralflanke (40) ausgehend, etwa parallel zur Basis (42) verläuft.

3. Scheibenwischvorrichtung nach einem der vorhergehenden Ansprüche, **dadurch gekennzeichnet, dass** die Lasche (46) einstückig mit dem Befestigungsteil (26) ausgebildet ist.

4. Scheibenwischvorrichtung nach einem der vorhergehenden Ansprüche, **dadurch gekennzeichnet, dass** die Lasche (46) mindestens in der gelenkteilseitigen Hälfte des Befestigungsteils (26), vorzugsweise im gelenkteilseitigen Viertel des Befestigungsteils (26) angeordnet ist.

5. Scheibenwischvorrichtung nach einem der vorhergehenden Ansprüche, **dadurch gekennzeichnet, dass** die Lasche (46) eine Öffnung (48) zur Befestigung des Zugmittels (34) aufweist.

6. Scheibenwischvorrichtung nach einem der vorhergehenden Ansprüche, **dadurch gekennzeichnet, dass** das Zugmittel (34) mindestens eine Zugfeder (36), an die insbesondere ein C-förmiger Bügel (38) angelenkt ist, aufweist

7. Scheibenwischvorrichtung nach einem der Ansprüche 5 und 6, **dadurch gekennzeichnet, dass** die Öffnung (48) an zumindest einer das Zugmittel (34) berührenden Stelle verstärkt ist

8. Schebenwischvorrichtung nach Anspruch 1, **dadurch gekennzeichnet, dass** zwischen dem laschenfernen Ende des Stützansatzes (52) und der Basis (42) ein Spalt vorhanden ist.

9. Scheibenwischvorrichtung nach einem der vorhergehenden Ansprüche, **dadurch gekennzeichnet, dass** die Lasche (46) einen Ansatz (54) aufweist.

10. Scheibenwischvorrichtung nach einem der vorhergehenden Ansprüche, **dadurch gekennzeichnet, dass** das Gelenkteil (28) eine Befestigungslasche (62) aufweist, die mit einer Gelenkteilflanke (60) einen Winkel (w) einschließt und dass die Lasche (46) mit der Lateralflanke (40) etwa den gleichen Winkel (w) einschließt.

## Claims

1. Wiper device, in particular for a vehicle, with a wiper arm (20) which has at least an articulated part (28) and a fastening part (26) which is coupled to the articulated part (28) and is connected to the articulated part (28) by means of a tension means (34), the fastening part (26) essentially comprising a profile with a base (42) and at least one lateral flank (40), and the tension means (34) being fastened to the fastening part (26) at a tab (46) which extends from the lateral flank (40) and is connected thereto, **characterized in that** the tab (46) has a supporting extension (52), and the supporting extension (52) for supporting the tab (46) on the base (42) runs from an edge of the tab (46) approximately vertically towards the base (42).

2. Wiper device according to Claim 1, **characterized in that** the tab (46), starting from that edge of the lateral flank (40) which faces away from the base (42), runs approximately parallel to the base (42).

3. Wiper device according to one of the preceding claims, **characterized in that** the tab (46) is formed integrally with the fastening part (26).

4. Wiper device according to one of the preceding claims, **characterized in that** the tab (46) is arranged at least in the articulated-part half of the fastening part (26), preferably in the articulated-part quarter of the fastening part (26).

5. Wiper device according to one of the preceding claims, **characterized in that** the tab (46) has an opening (48) for the fastening of the tension means (34).

6. Wiper device according to one of the preceding claims, **characterized in that** the tension means (34) has at least one tension spring (36) to which in particular a C-shaped clip (38) is coupled.

7. Wiper device according to either of Claims 5 and 6, **characterized in that** the opening (48) is reinforced at at least one point in contact with the tension means (34).

8. Wiper device according to Claim 1, **characterized in that** there is a gap between that end of the supporting extension (52) which is remote from the tab and the base (42).

9. Wiper device according to one of the preceding claims, **characterized in that** the tab (46) has an extension (54).

10. Wiper device according to one of the preceding claims, **characterized in that** the articulated part (28) has a fastening tab (62) which encloses an angle (w) with an articulated-part flank (60), and **in that** the tab (46) encloses approximately the same angle (w) with the lateral flank (40).

## Revendications

1. Dispositif d'essuie-glace, notamment pour un véhicule automobile, comportant un bras d'essuie-glace (20) muni d'au moins une pièce d'articulation (28) et d'une pièce de fixation (26) articulée à la pièce d'articulation (28) et reliée à celle-ci par un moyen de traction (34),
la pièce de fixation (26) se composant principalement d'un profilé ayant une base (42) et au moins un flanc latéral (40),
le moyen de traction (34) étant relié à la pièce de fixation (26) par une patte (46) issue solidairement du flanc latéral (40)
**caractérisé en ce que**
la patte (46) comporte un prolongement d'appui (52) partant de la base (42) d'une arête de la patte (46) et divisé sensiblement perpendiculairement à la base (42) pour soutenir la patte (46).

2. Dispositif d'essuie-glace selon la revendication 1,
**caractérisé en ce que**
la patte (46) est sensiblement parallèle à la base (42) en partant de l'arête du flanc latéral (40) non tournée vers la base (42).

3. Dispositif d'essuie-glace selon l'une des revendications précédentes,
**caractérisé en ce que**
la patte (46) fait partie de la pièce de fixation (26).

4. Dispositif d'essuie-glace selon l'une des revendications précédentes,
**caractérisé en ce que**
la patte (46) est prévue au moins dans la moitié, côté articulation, de la pièce de fixation (26), de préférence dans le quart de la pièce de fixation, (26) côté articulation.

5. Dispositif d'essuie-glace selon l'une des revendications précédentes,
**caractérisé en ce que**
la patte (46) comporte un orifice (48) pour fixer le moyen de traction (34).

6. Dispositif d'essuie-glace selon l'une des revendications précédentes,
**caractérisé en ce que**
le moyen de traction (34) comporte au moins un ressort de traction (36) auquel est articulé en particulier un arceau (38) en forme de C.

7. Dispositif d'essuie-glace selon l'une des revendications 5 et 6,
**caractérisé en ce que**
l'orifice (48) est renforcé en au moins un point touchant le moyen de traction (34).

8. Dispositif d'essuie-glace selon la revendication 1,
**caractérisé par**
un intervalle entre l'extrémité du prolongement d'appui (52) éloignée de la patte et la base (42).

9. Dispositif d'essuie-glace selon l'une des revendications précédentes,
**caractérisé en ce que**
la patte (46) comporte un prolongement (54).

10. Dispositif d'essuie-glace selon l'une des revendications précédentes,
**caractérisé en ce que**
la pièce d'articulation (28) comporte une patte de fixation (62) faisant un angle (w) avec le flanc (60) de la pièce d'articulation et la patte (46) fait sensiblement le même angle (w) que le flanc latéral (40).
